# EUROPEAN PATENT SPECIFICATION

(11) **EP 1 431 799 B1**
(45) Date of publication and mention of the grant of the patent: **23.08.2006**
(21) Application number: 02028437.8
(22) Date of filing: 19.12.2002
(51) Int. Cl.: G02C 9/00

(54) **A separate clip for attachment glasses**
Entfernbare Klemme für Hilfsbrille
Attache séparée pour lunettes auxiliaires

(43) Date of publication of application: 23.06.2004
(73) Proprietor: Chen, Lee-Tsung, Taipei City, Taiwan 111 (TW)
(72) Inventor: Chen, Lee-Tsung, Taipei City, Taiwan 111 (TW)
(74) Representative: Panten, Kirsten

(56) References cited:
- US-B1- 6 283 591
- US-B1- 6 293 672
- US-B1- 6 354 703

## Description

### BACKGROUND OF THE INVENTION

The present invention relates to spectacles and more particularly to a separate clip for attachment glasses to grip the bridge of a pair of spectacles.

As we know that a pair of spectacles are helpful to the people who have eyesight problems. It not only improves the user's eyesight, protects the eye from under strong light and ultraviolet rays but also beautifies the face of the user. A nearsightedness could not leave the spectacles and feels difficult to walk under the sunshine. If he wears a pair of plane dark colored glasses, he can not see anything in front of him except that the lens of the dark colored glasses has the same degrees suitable to him. This may cost too much for him. So that an attachable sun glasses is therefore produced to directly attach to the lens of the spectacles in order to solve this problem. However, the attachment of the attachable sun glasses to the spectacles has may disadvantages on design such that the original spectacles must be amended to match with the sun glasses or that the sun glasses must be designed to match with different shapes of the spectacles. Otherwise, the sun glasses will break off under any vibration when the user jumps or runs.

The applicant of this invention has been granted two U.S. Patent (USP6283591B1 and USP6293672B1) on which a pair of magnetic gripping plates horizontally or vertically fix to the bridge of an attachment glasses and grip on the bridge of a pair spectacles. The attachment result is very good. The coupling of the gripping plates with the attachment glasses includes fixed connection or pivotal connection all of which requires special manufacturing of the component parts and assembly of the parts to the attachment glasses. Besides, the component parts must variable to match with different shapes of the spectacles. This is very inconvenient.

Attachment glasses comprising separate magnetic clamps are disclosed in US 6,354,703.

### SUMMARY OF THE PRESENT INVENTION

The present invention has a principal object to provide a separate clip for attachment glasses. The separate clip can easily engage with the attachment glasses and firmly grip the spectacles.

Another object of the present invention is to provide a separate clip for attachment glasses which clip suit to variety to attachment glasses and spectacles and omits assembly process.

Accordingly, the present invention provides attachment glasses as defined in claim 1. The attachment glasses of the present invention comprises a separate clip having an upper gripping piece and a lower gripping piece pivotally connected to the upper gripping. Each of the gripping pieces has at least a magnet attracting each other. The lower gripping piece has a positioning plate engageable into a pair of coupling gaps in the bridge of the attachment glasses and a gripping space for gripping the bridge of a spectacles therein. Due to the magnets, the gripping of the attachment glasses to the spectacles is very stable and reliable. The characteristic of this separate clip is suitable to the variety of attachment glasses and spectacles.

The present invention will become more fully understood by reference to the following detailed description thereof when read in conjunction with the attached drawings.

### BRIEF DESCRIPTION OF THE DRAWINGS

Figure 1 is an exploded perspective view showing a separate clip of a first embodiment of the present invention,
Figure 2 is a perspective view showing that the separate clip is engaged with an attachment glasses and enables the attachment glasses to grip the bridge of a spectacles,
Figure 3 is a perspective view showing that the clip is already gripped the bridge of the spectacles,
Figure 4 is a top view with partially sectional view of Fig. 3,
Figure 5 is a sectional view showing that a upper gripping piece is at an open position,
Figure 6 is a sectional view showing that the upper gripping piece is at a closed position,
Figure 7 is an exploded perspective view showing a separate clip of a second embodiment of the present invention,
Figure 8 is a sectional view showing that the separate clip of Fig. 7 grips the spectacles,
Figure 9 is an exploded perspective view showing a separate clip of a third embodiment of the present invention,
Figure 10 is a sectional view showing that a front gripping piece is at open position, and
Figure 11 is a sectional view showing that the front gripping piece is at closed position.

### DETAILED DESCRIPTION OF THE PREFERRED EMBODIMENT

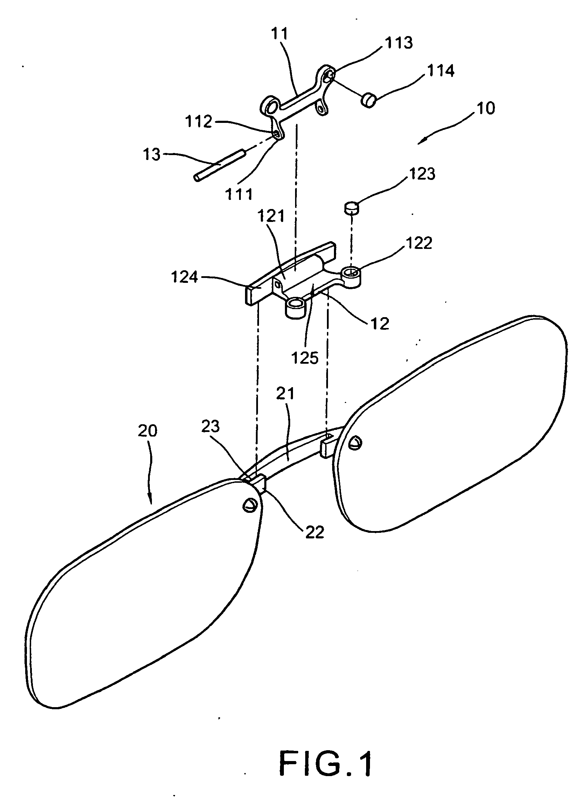

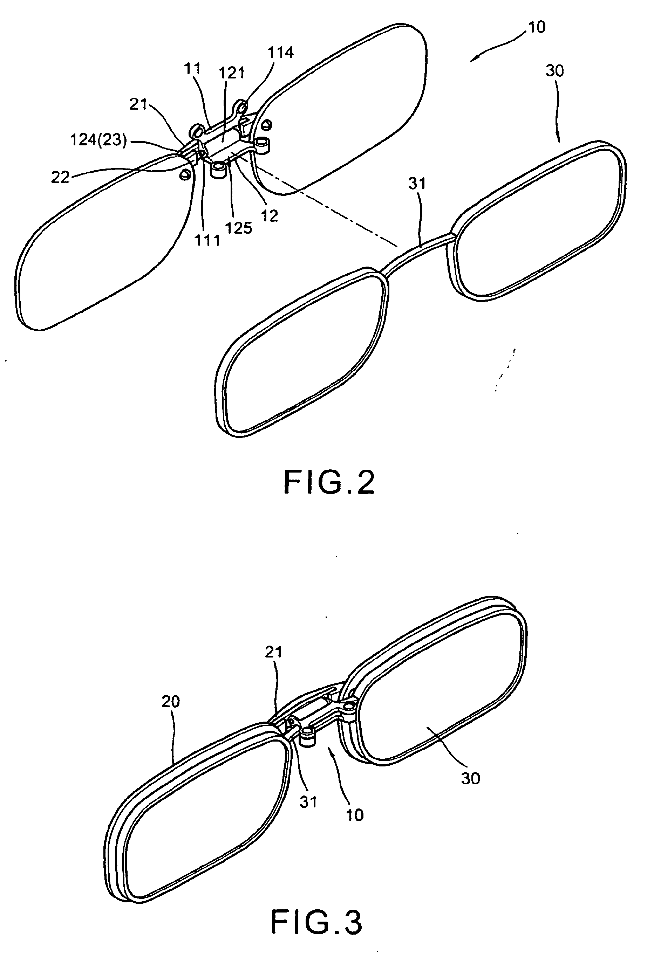

With reference to Figs. 1, 2 and 3 of the drawings, the separate clip for attachment glasses of the first embodiment of the present invention comprises a separate clip 10 combined with an upper gripping piece 11 and a lower gripping piece 12. The upper gripping piece 11 has a lug 111 on underside including an aligned through hole 112 adjacent the end thereof, a pair of inclined branches spacedly formed on the top opposite to the lug 111 each having a retaining recess 113 adjacent the end for disposing magnet 114 therein. The lower gripping piece 12 has a barrel 121 on rear end, a pair of protrudent retaining recesses 122 spacedly formed on front end for respectively disposing a pair magnets 123 of opposing pole relative to the magnets 114, a positioning plate 124 connected to the outer surface of the barrel 121 and a gripping space 125 defined between the retaining recess 122 and the barrel 121. When assembling, engage the barrel 121 of the lower gripping piece 12 with the aligned through hole 112 of the lug 111 of the upper gripping piece 11 and rotatably secured by a pin 13.

An attachment glasses 20 has a bridge 21 and a pair of protrusions 22 symmetrically formed at two ends of the bridge 21 and parallel to the bridge 21 so as to define a pair of coupling gaps 23 therebetween for engaging with the positioning plate 124 of the separate clip 10.

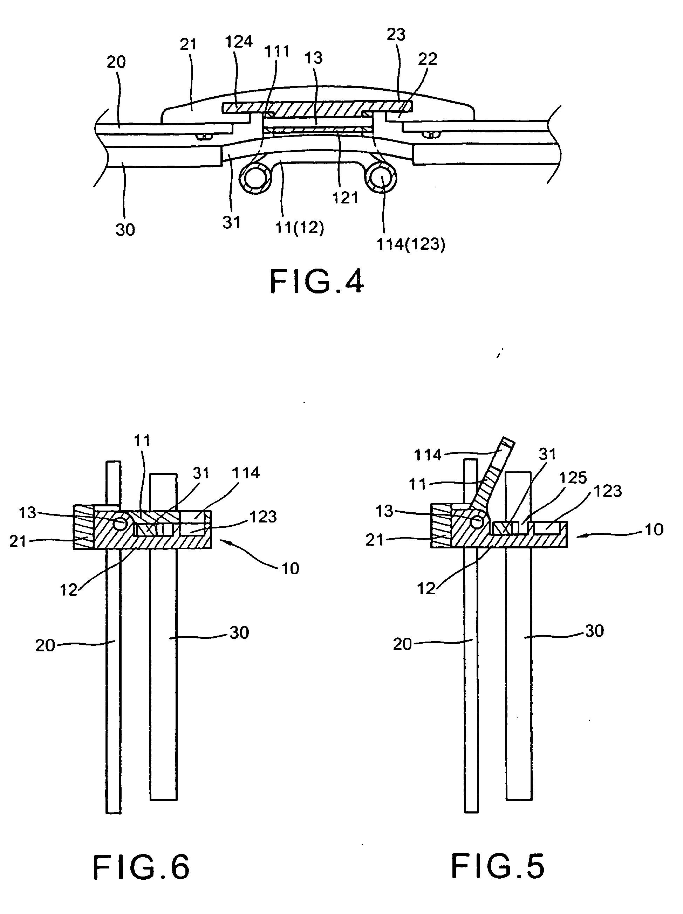

Based on afore discussed structure, the separate clip 10 is independent of the attachment glasses 20. It neither integrates with nor secure to but releasably engaged with the coupling gaps 23 of the attachment glasses 20 and firmly grips the attachment glasses 10 to the bridge 31 of a pair of spectacles 30 due to the attraction of the magnets 114 and 123 (as shown in Figs. 4, 5 and 6).

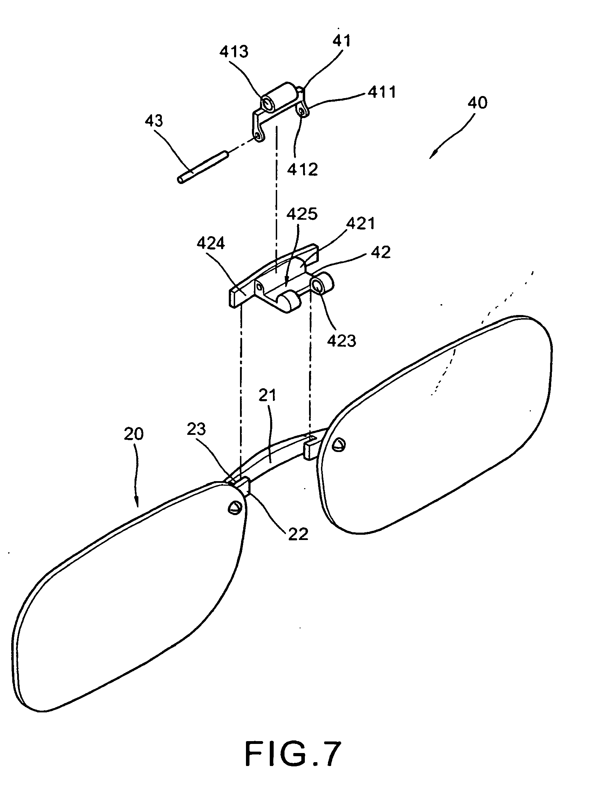

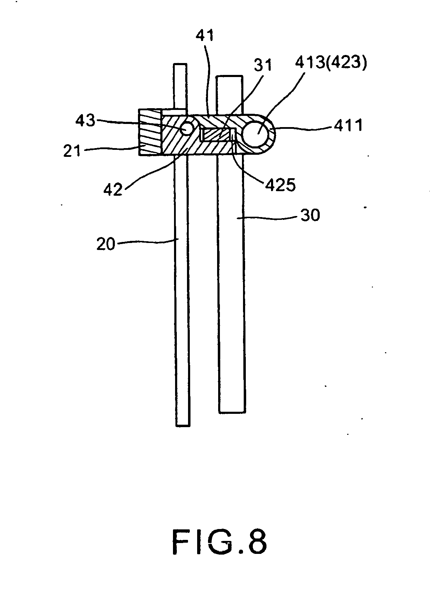

Referring to Figs. 7 and 8, a second embodiment of the separate clip 40 of the present invention is provided. The separate clip 40 is combined with an upper gripping piece 41 and a lower gripping piece 42. The upper gripping piece 41 has a lug 411 having an aligned though hole 412 on underside and transverse tube on the top engaged within an elongate magnet 413. The lower gripping piece 42 has a barrel 421 on rear end engaged with the aligned through hole 412 of the upper gripping piece 41 and rotatably secured by a pin 43, a pair of horizontal recesses symmetrically formed on front end each engaged within a magnet 423 with is made in registry with the elongate magnet 413 of the upper gripping piece 41, a positioning plate 424 connected to the outer surface of the barrel 421 releasably engageable with the coupling gaps 23 of the attachment glasses 20 and a gripping space 425 defined between the barrel 421 and the horizontal recesses for gripping the bridge of the spectacles 30. When the positioning plate 424 of the separate clip 40 releasably engaged within the coupling gaps 23 of the attachment glasses 20 and the upper and lower gripping piece grip the bridge 31 of the spectacles 30, the magnets 413 and 423 will attract each other.

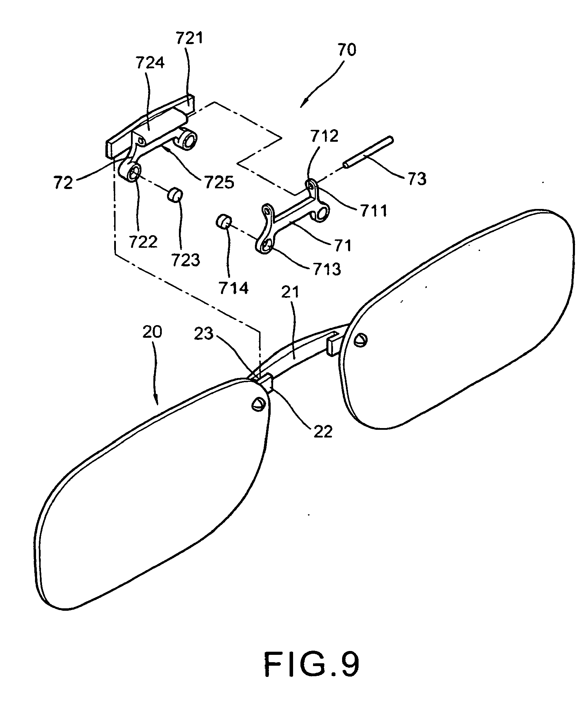

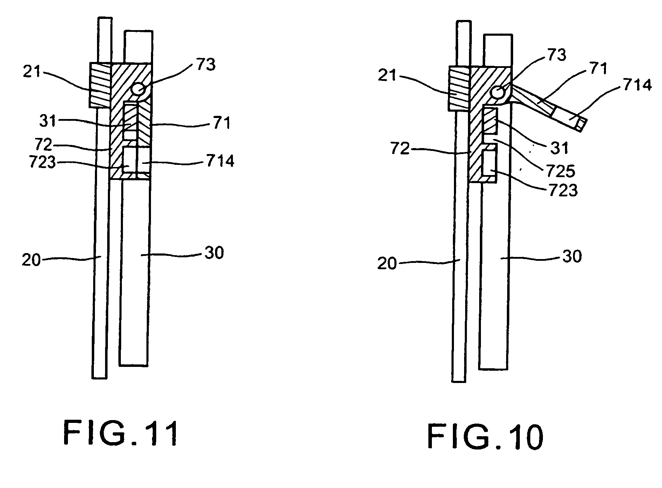

Referring to Figs. 9, 10 and 11, a third embodiment of the separate clip 70 is provided. The separate clip 70 is combined with a front gripping piece 71 and a rear gripping piece 72. The front gripping piece 71 has a lug 711 on the top with an aligned through hole 712 in free end and a pair of first inclined braches spacedly formed on underside each having a first retaining recess 713 abutting free end for respectively disposing a pair of magnets 714 therein. The rear gripping piece 72 has a positioning plate 724 on the back made engageable with the coupling gaps 23 of the attachment glasses 20, a pair of second inclined branches on underside each having a second retaining recess 722 for respectively disposing a pair of magnets 723 therein which is made in registry with the magnets 714 of the front gripping piece 71 and a barrel 721 on the top made engaged with the aligned through hole 712 of the front gripping piece 71 and rotatably secured by a pin 73. After the positioning plate 724 releasably engaged within the coupling gaps 23 of the attachment glasses 20, the separate clip 70 is able to vertically grip the bridge 31 of the spectacles 30. The gripping is also very stable due to the attraction of the magnets 714 and 723. If a strong clip is made under the rear gripping piece 72 to grip the bridge 21 of the attachment glasses 20, it will obtain the same result.

Further, the separate clip 10, 40 and 70 can be made to different sizes in order to match with the variety of the attachment glasses 20 and the spectacles 30. Because of the ready engagement of the separate clip 10, 40 and 70 to the attachment glasses 20 it provides a great convenience and benefit to the manufacturer, the optician's shop and the users.

## Claims

1. Attachment glasses (20) for being attached to spectacles (30) and comprising
a bridge (21) and a pair of protrusions (22) symmetrically formed at two ends of said bridge (21) and parallel to said bridge (21) to define a pair of coupling gaps (23) therebetween
**characterised by** further comprising
a separate clip (10;40;70) adapted to be clipped to said attachment glasses and having a first gripping piece (11;41;71)) and a second gripping piece (12;42;72) wherein said first gripping piece (11;41;71) has a lug (111;411;711) with an aligned through hole (112;412;712) adjacent free end thereof and comprising at least one first magnet (114;414;714) and one first retainging recess (113; 413; 713) for engaging with said first magnet (114;414;714), the second gripping piece (12;42;72) comprising a pin (13;43;73) and a barrel (121;421;724) engaged with the aligned through hole (112;412;712) of said first gripping piece (11;41;71) and rotatably secured by said pin (13;43;73) and at least one second magnet (123;423;723) and one second recess (122;422;722) for disposing said second magnet (123;423;723) of opposing pole which is made in registry with the at least one first magnet (114;414;714) of said first gripping piece (11;41;71), and
said separate clip comprising a positioning plate (124;424;721) connected to the outer surface of said barrel (121;421;724) made releasably engageable with the coupling gaps (23) of said attachment glasses (20) and a gripping space (125) defined between said barrel and said protrudent recesses for firmly gripping the attachment glasses (20) to a bridge (31) of said spectacles (30) due to the attraction of the magnets (114, 123).

2. Attachment glasses according to claim 1,
**characterized in that** the separate clip (10) has an upper gripping piece (11) and a lower gripping piece (12) wherein said upper gripping piece (11) has the lug (111) on underside with the aligned through hole (112) adjacent free end thereof and a pair of inclined branches spacedly formed on top, each having a retaining recess (113) adjacent free end for respectively disposing a pair of the first magnets (114) therein, said lower gripping piece (12) having the barrel (121) on rear end engaged with the aligned through hole of said upper gripping piece (11) and rotatably secured by the pin (13), a pair of protrudent recesses (122) spacedly formed on front end for respectively disposing a pair of the second magnets (123) of opposing poles which are made in registry with the first magnets (114) of said upper gripping piece (11).

3. Attachment glasses according to claim 1,
**characterised in that**
the separate clip (40) has an upper gripping piece (41) and a lower gripping piece (42) wherein said upper gripping piece (41) has a transverse tube (413) on top engaged within an elongate first magnet and having the lug (411) on underside with the aligned through hole (412) adjacent free end, said lower gripping piece (42) having the barrel (421) on- rear end and a second magnet (423) which is made in registry with the elongate first magnet of said upper gripping piece (41).

4. Attachment glasses according to claim 1,
**characterised in that**
the separate clip (70) has a front gripping piece (71) and a rear gripping piece (72) wherein said front gripping piece (71) has a lug (711) on top with an aligned through hole (712) adjacent free end and a pair of first inclined branches spacedly formed on underside each having a first retaining recess (713) adjacent free end adjacent free end for disposing a pair of first magnets (714) therein, said rear gripping piece (72) having a pair of second inclined branches spacedly formed on underside each having a second retaining recess (722) abutting free end for disposing therein a pair of second magnets (723) which are made in registry with the first magnets (714) of said front gripping piece (71).

## Patentansprüche

1. Hilfsbrille (20) zum Anbringen an eine Brille (30), wobei die Hilfsbrille einen Steg (21) und ein Paar Vorsprünge (22) aufweist, die symmetrisch an den beiden Enden des Steges (21) ausgebildet sind, parallel zum Steg (21) verlaufen und ein Paar Kupplungsspalte (23) dazwischen ausbilden,
**dadurch gekennzeichnet,**
**daß** sie außerdem eine entfernbare Klemme (10;40;70) aufweist, die sich an die Hilfsbrille anklemmen läßt und ein erstes Greifstück (11;41;71) sowie ein zweites Greifstück (12;42;72) aufweist, wobei das erste Greifstück (11;21;71) einen Ansatz (111;411;711) mit einer ausgerichteten Öse (112;412;712) am freien Ende sowie mindestens einen ersten Magneten (114;414;714) und eine erste Halteausnehmung (113;413;713) zum Eingriff mit dem ersten Magneten (114;414;714) aufweist, das zweite Greifstück (12;42;72) einen Stift (13;43;73) und ein Halterohr (121;421;724), welches mit der ausgerichteten Öse (112;412;712) des ersten Greifstücks (11;41;71) in Flucht steht und durch den Stift (13;43;73) drehbar gehaltert wird, sowie mindestens einen zweiten Magneten (123;423;723) und eine zweite Ausnehmung (122;422;722) zur Aufnahme des zweiten Magneten (123;423;723) entgegengesetzter Polarität aufweist, der in Deckung mit dem mindestens einen ersten Magneten (114;414;714) des ersten Greifstücks (11;41;71) angeordnet ist, und
**daß** die entfernbare Klemme eine Steckschiene (124;424;721), die mit der äußeren Oberfläche des Halterohrs (121;421;724) verbunden und in die Kupplungsspalte (23) der Hilfsbrille (20) einsteck- und aus ihnen herausnehmbar ist, sowie einen Greifraum (125) aufweist, der sich zwischen dem Halterohr und den hervorstehenden Ausnehmungen zum festen Anklemmen der Hilfsbrille (20)
an einen Steg (31) der Brille (30) aufgrund der Anziehung der Magnete (114,123) erstreckt.

2. Hilfsbrille gemäß Anspruch 1,
**dadurch gekennzeichnet,**
**daß** die entfernbare Klemme (10) ein oberes Greifstück (11) und ein unteres Greifstück (12) aufweist, wobei das obere Greifstück (11) den Ansatz (111) mit der ausgerichteten Öse (112) angrenzend an das freie Ende an der Unterseite aufweist und ein Paar im Abstand angeordneter, geneigter Arme an der Oberseite ausgebildet sind, von denen jeder eine Halteausnehmung (113) angrenzend an das freie Ende zum Anordnen eines Paares erster Magnete (114) in ihnen aufweist, das untere Greifstück (12) das Halterohr (121) am hinteren Ende mit der ausgerichteten Öse des oberen Greifstücks (11) in Flucht liegend und durch den Stift (13) drehbar gehaltert aufweist und ein Paar hervorragende Ausnehmungen (122) am Vorderende im Abstand voneinander ausgebildet sind, um ein Paar zweiter Magnete (123) entgegengesetzter Polarität anzuordnen, die sich in Deckung mit den ersten Magneten (114) des oberen Greifstücks (11) befinden.

3. Hilfsbrille gemäß Anspruch 1,
**dadurch gekennzeichnet,**
**daß** die entfernbare Klemme (40) ein oberes Greifstück 41) und ein unters Greifstück (42) aufweist, wobei das obere Greifstück (41) ein quer verlaufendes Rohr (413) an seiner Oberseite besitzt, welches einen langgestreckten ersten Magneten enthält, und den Ansatz (411) mit der aus gerichteten Öse (412) angrenzend an das freie Ende an der Unterseite aufweist und das untere Greifstück (42) das Halterohr (421) am rückwärtigen Ende sowie einen zweiten Magneten (423) in Deckung mit dem langgestreckten ersten Magneten des oberen Greifstücks (41) aufweist.

4. Hilfsbrille gemäß Anspruch 1,
**dadurch gekennzeichnet,**
**daß** die entfernbare Klemme (70) ein vorderes Greifstück (71) und ein hinteres Greifstück (72) aufweist, wobei das vordere Greifstück (71) einen Ansatz (711) an der Oberseite mit einer ausgerichteten Öse (712) angrenzend an das freie Ende besitzt sowie ein Paar erster geneigter, im Abstand voneinander angeordneter Arme an der Unterseite ausgebildet sind, von denen jeder eine erste Halteausnehmung (713) angrenzend an das freie Ende zur Anordnung eines Paares erster Magnete (714) darin aufweist, und das hintere Greifstück (72) ein Paar zweiter geneigter Arme aufweist, die im Abstand voneinander an der Unterseite ausgebildet sind und von denen jeder eine zweite Halteausnehmung (722) am freien Ende zur Anordnung eines Paares zweiter Magnete (723) aufweist, die in Deckung stehend mit den ersten Magneten (714) des vorderen Greifstücks (71) angeordnet sind.

## Revendications

1. Lunettes auxiliaires (20) destinées à être fixées sur des lunettes (30) et comprenant
une arcade (21) et une paire de protubérances (22) formées de manière symétrique à deux extrémités de ladite arcade (21) et parallèlement à ladite arcade (21) pour définir une paire d'espaces d'accouplement (23) entre celles-ci
**caractérisées en ce qu'**elles comprennent en outre
une attache séparée (10 ; 40 ; 70) adaptée pour être attachée auxdites lunettes auxiliaires et présentant une première pièce de préhension (11 ; 41 ; 71) et une seconde pièce de préhension (12 ; 42 ; 72), dans laquelle ladite première pièce de préhension (11 ; 41 ; 71) présente une oreille (111 ; 411 ; 711) dotée d'un orifice de passage aligné (112 ; 412 ; 712) adjacente à l'extrémité libre de celle-ci et comprenant au moins un premier aimant (114 ; 414 ; 714) et un premier évidement de retenue (113 ; 413 ; 713) destinés à mettre en prise un dit premier aimant (114 ; 414 ; 714), la seconde pièce de préhension (12 ; 42 ; 72) comprenant une broche (13 ; 43 ; 73) et un cylindre (121 ; 421 ; 724) mis en prise avec l'orifice de passage aligné (112 ; 412 ; 712) de ladite première pièce de préhension (11 ; 41 ; 71) et fixé de manière rotative par ladite broche (13 ; 43 ; 73) et au moins un second aimant (123 ; 423 ; 723) et un second évidement (122 ; 422 ; 722) destiné à disposer un dit second aimant (123 ; 423 ; 723) de pôle opposé qui est réalisé en coïncidence avec le au moins un premier aimant (114 ; 414 ; 714) de ladite première pièce de préhension (11 ; 41 ; 71), et
ladite attache séparée comprenant
une plaque de positionnement (124 ; 424 ; 721) raccordée à la surface externe dudit cylindre (121 ; 421 ; 724) réalisée de manière à pouvoir se mettre en prise de manière amovible avec les espaces d'accouplement (23) desdites lunettes auxiliaires (20) et un espace de préhension (125) défini entre ledit cylindre et lesdits évidements en saillie pour saisir fermement les lunettes auxiliaires (20) sur une arcade (31) desdites lunettes (30) en raison de l'attraction des aimants (114, 123).

2. Lunettes auxiliaires selon la revendication 1,
**caractérisées en ce que** l'attache séparée (10) présente une pièce de préhension supérieure (11) et une pièce de préhension inférieure (12), dans lesquelles ladite pièce de préhension supérieure (11) a l'oreille (111) sur la face inférieure avec l'orifice de passage aligné (112) adjacent à l'extrémité libre de celle-ci et une paire de branches inclinées formées de manière espacée sur la partie supérieure, chacune présentant un évidement de retenue (113) adjacent à l'extrémité libre pour disposer respectivement une paire des premiers aimants (114) à l'intérieur de celui-ci, ladite pièce de préhension inférieure (12) ayant le cylindre (121) sur l'extrémité arrière mise en prise avec l'orifice de passage aligné de ladite pièce de saisie supérieure (11) et fixé de manière rotative par la broche (13), une paire d'évidements en saillie (122) formés de manière espacée sur l'extrémité avant pour disposer respectivement une paire des seconds aimants (123) de pôles opposés qui sont réalisés en coïncidence avec les premiers aimants (114) de ladite pièce de préhension supérieure (11).

3. Lunettes auxiliaires selon la revendication 1,
**caractérisées en ce que**
l'attache séparée (40) présente une pièce de préhension supérieure (41) et une pièce de préhension inférieure (42), dans lesquelles ladite pièce de préhension supérieure (41) a un tube transversal (413) sur la partie supérieure mis en prise à l'intérieur d'un premier aimant allongé et ayant l'oreille (411) sur la face inférieure avec l'orifice de passage aligné (412) adjacent à l'extrémité libre, ladite pièce de préhension inférieure (42) ayant le cylindre (421) sur l'extrémité arrière et un second aimant (423) qui est réalisé en coïncidence avec le premier aimant allongé de ladite pièce de préhension supérieure (41).

4. Lunettes auxiliaires selon la revendication 1,
**caractérisées en ce que**
l'attache séparée (70) présente une pièce de préhension avant (71) et une pièce de préhension arrière (72), dans lesquelles ladite pièce de préhension avant (71) a une oreille (711) sur la partie supérieure avec un orifice de passage aligné (712) adjacent à l'extrémité libre et une paire de premières branches inclinées formées de manière espacée sur la face inférieure ayant chacune un premier évidement de retenue (713) adjacent à l'extrémité libre pour disposer une paire de premiers aimants (714) à l'intérieur de celui-ci, ladite pièce de préhension arrière (72) présentant une paire de secondes branches inclinées formées de manière espacée sur la face inférieure ayant chacune un second évidement de retenue (722) en butée contre l'extrémité libre pour disposer à l'intérieur de celui-ci une paire de seconds aimants (723) qui sont réalisés en coïncidence avec les premiers aimants (714) de ladite pièce de préhension avant (71).
